(19) Europäisches Patentamt
European Patent Office
Office européen des brevets

(11) EP 4 206 165 A1

(12) **EUROPEAN PATENT APPLICATION**
published in accordance with Art. 153(4) EPC

(43) Date of publication:
**05.07.2023 Bulletin 2023/27**

(21) Application number: **21875595.7**

(22) Date of filing: **28.09.2021**

(51) International Patent Classification (IPC):
***C04B 38/00*** *(2006.01)* ***C04B 41/82*** *(2006.01)*
***G01N 21/64*** *(2006.01)*

(52) Cooperative Patent Classification (CPC):
**G01N 21/64; C04B 38/00; C04B 41/82;**
**G01N 21/8422;** G01N 2021/8411; G01N 2021/8438

(86) International application number:
**PCT/JP2021/035575**

(87) International publication number:
**WO 2022/071294 (07.04.2022 Gazette 2022/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.09.2020 JP 2020163282**

(71) Applicant: **Denka Company Limited**
**Tokyo 103-8338 (JP)**

(72) Inventors:
- **WAKUDA, Yusuke**
  **Tokyo 103-8338 (JP)**
- **MINAKATA, Yoshitaka**
  **Tokyo 103-8338 (JP)**
- **SAKAGUCHI, Shinya**
  **Tokyo 103-8338 (JP)**
- **YAMAGUCHI, Tomoya**
  **Tokyo 103-8338 (JP)**
- **IKARASHI, Koki**
  **Tokyo 103-8338 (JP)**
- **NISHIMURA, Koji**
  **Tokyo 103-8338 (JP)**

(74) Representative: **Hoffmann Eitle**
**Patent- und Rechtsanwälte PartmbB**
**Arabellastraße 30**
**81925 München (DE)**

(54) **METHOD FOR EVALUATING ADHESION RELIABILITY AND HEAT RADIATION PERFORMANCE OF COMPOSITE, AND COMPOSITE**

(57) One aspect of the present disclosure is a method for evaluating adhesiveness performance and heat radiation performance of a composite including a porous sintered ceramic component and a semi-cured product of a resin filled into pores of the sintered ceramic component, including a step of emitting ultraviolet rays to the surface of the semi-cured product of the composite; a step of measuring an emission intensity of fluorescence generated from the semi-cured product; and a step of evaluating adhesiveness performance and heat radiation performance of the composite using the value of the emission intensity.

*Fig.1*

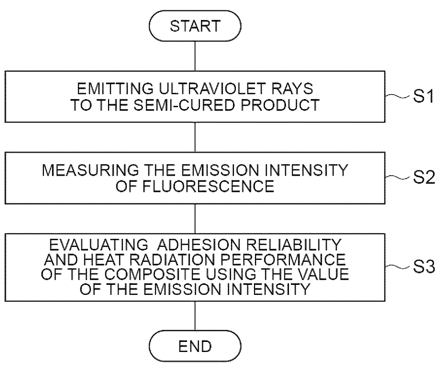


EP 4 206 165 A1

## Description

### Technical Field

The present disclosure relates to a method for evaluating adhesion reliability and heat radiation performance of a composite and a composite.

### Background Art

Components such as power devices, transistors, thyristors, and CPUs are required to efficiently radiate heat generated during use. In response to such demands, conventionally, it is possible to increase the thermal conductivity of an insulating layer of a printed wiring board on which an electronic component is mounted or attach an electronic component or a printed wiring board to a heat sink via a thermal interface material having electrical insulation. For such an insulating layer and thermal interface material, a composite composed of a resin and a ceramic such as boron nitride is used as a heat radiation member.

As such a composite, a composite obtained by combining a porous sintered ceramic component (for example, a sintered boron nitride component) and a resin by impregnating the sintered ceramic component with the resin has been studied (for example, refer to Patent Literature 1). In addition, in a laminate including a metal circuit and a resin-impregnated sintered boron nitride component, bringing primary particles constituting the sintered boron nitride component and the metal circuit into direct contact with each other to reduce the thermal resistance of the laminate and improve heat radiation has also been studied (for example, refer to Patent Literature 2).

### Citation List

### Patent Literature

[Patent Literature 1] PCT International Publication No. WO2014/196496
[Patent Literature 2] Japanese Unexamined Patent Publication No. 2016-103611

### Summary of Invention

### Technical Problem

As described above, heat radiation performance of a laminate obtained by adhering a composite to other members is evaluated for the laminate after adhesion, but it is not easy to take measures for improving heat radiation performance after adhesion. In addition, along with high integration of circuits in semiconductor devices and the like in recent years, it has been required to reduce the size of components. When the sizes of components are reduced, the contact area between members tends to be smaller. Under such circumstances, in order to secure reliability of semiconductor devices and the like, it is considered necessary to improve adhesiveness between members made of different materials. It would be useful if there were a composite that could exhibit adhesiveness performance and heat radiation performance in a well-balanced manner. In addition, in consideration of production of products, it would be useful if there were a method for predicting adhesiveness performance and heat radiation performance after adhesion by analyzing the composite before adhesion to other members.

An object of the present disclosure is to provide an evaluation method in which it is possible to evaluate whether adhesiveness performance and heat radiation performance are excellent when a laminate is formed by adhesion to other members by non-destructive analysis of a composite before adhesion. An object of the present disclosure is to provide a composite that can exhibit excellent adhesiveness performance and heat radiation performance when adhered to other members to form a laminate.

### Solution to Problem

The inventors conducted various studies regarding composites and laminates, and found that there is a correlation between the intensity of fluorescence generated by emitting ultraviolet rays to a composite and adhesiveness performance and heat radiation performance of a laminate obtained by adhering the composite to other members, and completed the present disclosure based on the finding.

One aspect of the present disclosure is a method for evaluating adhesiveness performance and heat radiation

performance of a composite including a porous sintered ceramic component and a semi-cured product of a resin filled into pores of the sintered ceramic component, including a step of emitting ultraviolet rays to the surface of the semi-cured product of the composite; a step of measuring an emission intensity of fluorescence generated from the semi-cured product is measured; and a step of evaluating adhesiveness performance and heat radiation performance of the composite are evaluated using the value of the emission intensity.

In the method of evaluating adhesiveness performance and heat radiation performance of the composite based on the above new finding, fluorescence emitted from the semi-cured product excited by ultraviolet rays is detected, and based on the intensity thereof, it is possible to evaluate adhesiveness performance and heat radiation performance of the composite to be measured.

The step of evaluating adhesiveness performance and heat radiation performance of the composite using the value of the emission intensity may be a step of evaluating performance and heat radiation performance of the composite based on the value of Y/X when a cured product obtained by completely curing a semi-cured product of the composite is irradiated with ultraviolet rays, an emission intensity of fluorescence generated from the cured product is X, the semi-cured product is irradiated with ultraviolet rays, and an emission intensity of fluorescence generated from the semi-cured product is Y

The semi-cured product may contain a resin having an aromatic ring as a component. When the semi-cured product contains a resin having an aromatic ring as a component, since fluorescence is likely to be generated according to emission of ultraviolet rays, the composite is more easily evaluated.

One aspect of the present disclosure provides a composite including a porous sintered ceramic component and a semi-cured product of a resin filled into pores of the sintered ceramic component, wherein a value of Y/X is 3.5 to 7.0 when a cured product obtained by completely curing a semi-cured product of the composite is irradiated with ultraviolet rays, an emission intensity of fluorescence generated from the cured product is X, the semi-cured product is irradiated with ultraviolet rays, and an emission intensity of fluorescence generated from the semi-cured product is Y

Since the value of Y/X is within a predetermined range, the composite may exhibit excellent adhesiveness performance and heat radiation when adhered to other members.

The semi-cured product may contain a resin having an aromatic ring as a component.

## Advantageous Effects of Invention

According to the present disclosure, it is possible to provide an evaluation method in which it is possible to evaluate whether adhesiveness performance and heat radiation performance are excellent when a laminate is formed by adhesion to other members by non-destructive analysis of a composite before adhesion. According to the present disclosure, it is possible to provide a composite that can exhibit excellent adhesiveness performance and heat radiation performance when adhered to other members to form a laminate.

## Brief Description of Drawings

FIG. 1 is a flow chart showing a process of an evaluation method.
FIG. 2 is a perspective view showing an example of a composite.
FIG. 3 is a cross-sectional view showing an example of a laminate.

## Description of Embodiments

Hereinafter, embodiments of the present disclosure will be described with reference to the drawings in some cases. However, the following embodiments are only examples for describing the present disclosure, and the present disclosure is not limited to the following content. In the description, components which are the same or components having the same functions are denoted with the same reference numerals and redundant descriptions will be omitted in some cases. In addition, positional relationships such as above, below, left and right are based on the positional relationship shown in the drawings unless otherwise specified. In addition, the dimensional ratios of respective components are not limited to the illustrated ratios.

Unless otherwise specified, materials exemplified in this specification may be used alone or two or more thereof may be used in combination. When there are a plurality of substances corresponding to components in a composition, the content of the components in the composition means a total amount of the plurality of substances in the composition unless otherwise specified.

<Method for evaluating adhesiveness performance and heat radiation performance of composite (evaluation method)>

A method for evaluating adhesiveness performance and heat radiation performance of a composite according to one embodiment is a method for evaluating adhesiveness performance and heat radiation performance of a composite including a porous sintered ceramic component and a semi-cured product of a resin filled into pores of the sintered ceramic component, including a step of emitting ultraviolet rays to the surface of the semi-cured product of the composite, a step of measuring an emission intensity of fluorescence generated from the semi-cured product, and a step of evaluating adhesiveness performance and heat radiation performance of the composite using the value of the emission intensity. When this evaluation method is used, it is possible to select a composite that can exhibit adhesiveness performance and heat radiation performance in a well-balanced manner, and thus the evaluation method can also be used as a selection method.

The emission intensity of fluorescence generated when ultraviolet rays are emitted to the semi-cured product of the composite is determined according to a balance between an increase in the emission intensity due to curing of the resin and a decrease in the emission intensity due to a reduced range of ultraviolet rays according to the semi-cured product that is colored and its transparency decreases as the resin is cured. More specifically, in a part of a structure of a monomer component, a resin component or the like in the semi-cured product (for example, a structure with delocalized electrons such as carbonyl groups and aromatic rings), when ultraviolet rays are emitted, electrons are excited, and fluorescence is generated during their relaxation. When such structures are close to each other, according to the interaction between orbitals occupied by delocalized electrons, the energy required for electron excitation is reduced and excitation light is easily absorbed, or the wavelength of the generated fluorescence becomes longer, and as a result, the emission intensity of the detected fluorescence increases. In the case of an aromatic ring, so-called $\pi$-$\pi$ stacking occurs, and thereby the above fluorescence emission intensity increases. In addition, as curing of the resin proceeds, when the semi-cured product is colored or when the transparency decreases, ultraviolet rays cannot reach the above structure, the fluorescence emission intensity may decrease, and as a result, the detected fluorescence emission intensity decreases. According to this balance, the detected fluorescence emission intensity is determined. Using this phenomenon, the state of the semi-cured product constituting the composite can be determined by non-destructive inspection. In addition, although the reason for this is not necessarily clear, since the state of the semi-cured product, which appears in the fluorescence emission intensity, is correlated with whether it is possible to achieve both adhesiveness performance and heat radiation performance at appropriate levels during adhesion to other members, the above fluorescence emission intensity can be used as an index for evaluating adhesiveness performance and heat radiation performance. That is, based on the emission intensity of fluorescence generated from a measurement subject, it is possible to estimate adhesiveness performance and heat radiation after adhesion to other members. Here, generally, as the degree of curing of the semi-cured resin product increases, the fluorescence emission intensity tends to increase as described above, but the degree of curing may not necessarily match the fluorescence emission intensity due to the effect of coloring or the like,

FIG. 1 is a flow chart showing a process of an evaluation method. The evaluation method according to the present disclosure includes emitting ultraviolet rays to the surface of the semi-cured product of the composite sheet (Step S1), measuring the emission intensity of fluorescence generated from the semi-cured product (Step S2), and evaluating heat radiation performance of the composite using the value of the emission intensity (Step S3). Hereinafter, the steps will be described.

In Step S1, ultraviolet rays are emitted to the surface of the semi-cured product exposed on the surface of the composite which is a measurement subject. The wavelength of ultraviolet rays emitted to the semi-cured product as excitation light may be, for example, 280 nm, 310 nm, 365 nm, 385 nm or 405 nm, but a wavelength of 365 nm is excellent in versatility. The intensity of ultraviolet rays emitted to the semi-cured product as excitation light may be, for example, 0.5 mW or less.

Ultraviolet rays and fluorescence may be attenuated as they propagate through the space. Therefore, according to the distance between the surface of the semi-cured product and the UV emission unit (UV light emission element) that emits ultraviolet rays and the sensor unit (detection element) that detects fluorescence, the intensity of emitted ultraviolet rays (that is, the amount of energy supplied) and the detected fluorescence emission intensity may change. Therefore, the measurement is performed when this distance is fixed. Since the fluorescence emission intensity changes according to the type of the resin contained in the semi-cured product or the like, for example, when the fluorescence emission intensity is small and is unable to be detected, the distance can be shortened to increase the detection sensitivity. The distance may be, for example, 35 to 300 mm, or 50 to 200 mm.

In Step S2, fluorescence generated when electrons excited by ultraviolet rays relax is detected, and its emission intensity is measured. The wavelength of fluorescence to be detected may be set to, for example, 280 to 405 nm. Here, for the fluorescence emission intensity, the same measurement is performed on both surfaces of the composite which is a measurement subject, and an average value thereof is used.

In Step 1 and Step 2, for example, a UV curing sensor (CUREA series, commercially available from AcroEdge

Corporation) or the like can be used.

In Step 3, adhesiveness performance and heat radiation performance are estimated and evaluated based on the measured fluorescence emission intensity. The evaluation can be performed based on the correlation between the fluorescence emission intensity which is measured in advance for a reference sample and adhesiveness performance and heat radiation performance during adhesion to other members. For example, the fluorescence emission intensity is measured for one sheet among a plurality of composite sheets cut out from the same composite, and the adhesive strength and thermal resistivity of a laminate obtained by adhesion to other members, and the fluorescence emission intensity of the completely cured product are then measured, and data for the correlation is acquired. Then, based on the obtained data, adhesiveness performance and heat radiation performance can be estimated and evaluated from the fluorescence emission intensity of other composites. In addition, this evaluation can also be applied to semi-cured products of resin compositions having the same or similar formulations. In recent years, in order to improve the yield, applying a resin composition or its semi-cured product to a sintered ceramic component that has been molded thinly in advance to impregnate the resin composition or its semi-cured product into the sintered ceramic component and then adjusting the curing state of the resin by heating or the like to produce a composite sheet has been studied, but in this case, the degree of curing of the semi-cured product in each composite sheet may vary. Even in such a case, using reference data (data indicating the relationship between the fluorescence emission intensity and adhesiveness performance and heat radiation performance obtained by measuring the fluorescence emission intensity for any one composite sheet and then measuring the adhesive strength and thermal resistivity of a laminate obtained by adhesion to other members), it is possible to evaluate adhesiveness performance and heat radiation performance of other composite sheets.

In Step 3, for example, data acquired in advance is accumulated, and in light of the accumulated data, a device that estimates adhesiveness performance and heat radiation performance from the fluorescence emission intensity obtained from the composite to be measured and outputs the results may be used for evaluation.

The step of evaluating adhesiveness performance and heat radiation performance of the composite using the value of the emission intensity may be a step of evaluating adhesiveness performance and heat radiation performance of the composite based on the value of Y/X when a cured product obtained by completely curing a semi-cured product of the composite is irradiated with ultraviolet rays, an emission intensity of fluorescence generated from the cured product is X, the semi-cured product is irradiated with ultraviolet rays, and an emission intensity of fluorescence generated from the semi-cured product is Y Here, the composite for determining X is desirably composed of a semi-cured product of the same or similar resin composition as the composite to be measured. In the resin constituting the semi-cured product, as curing of the resin proceeds, when the semi-cured product is colored or when the transparency decreases, or when the fluorescence emission intensity decreases as the degree of curing increases, the value of Y/X becomes less than 1. In the resin constituting the semi-cured product, when the semi-cured product is not colored and the transparency does not decrease as curing of the resin proceeds, the fluorescence emission intensity increases as the degree of curing increases, and the value of Y/X becomes larger than 1.

<Composite>

A composite according to one embodiment includes a porous sintered ceramic component and a semi-cured product of a resin filled into pores of the sintered ceramic component. FIG. 2 is a perspective view showing an example of a composite 10. A sintered ceramic component 20 may be, for example, a sintered nitride component. The sintered nitride component contains nitride particles formed by sintering nitride primary particles and pores.

When ultraviolet rays are emitted to the cured product obtained by completely curing the semi-cured product of the composite, an emission intensity of fluorescence generated from the cured product being set as X, ultraviolet rays being emitted to the semi-cured product, and an emission intensity of fluorescence generated from the semi-cured product being set as Y, the value of Y/X is 3.5 to 7.0. Here, the composite for obtaining X is a composite with a semi-cured product of the resin composition that is the same or similar to that of the composite to be measured as a component.

The lower limit value of the value of Y/X may be, for example, 4.0 or more, or 4.3 or more. When the lower limit value of the value of Y/X is within the above range, it is possible to further improve adhesiveness performance and heat radiation performance during adhesion to other members. The upper limit value of the value of Y/X may be, for example, less than 7.0, 6.3 or less, or 5.5 or less. When the upper limit value of the value of Y/X is within the above range, it is possible to further improve adhesiveness performance and heat radiation performance during adhesion to other members. The value of Y/X can be adjusted to be within the above range, and may be, for example, 3.5 to 7.0, 3.5 or more and less than 7.0, or 4.0 to 6.3. The value of Y/X can be controlled by adjusting the formulation of the resin composition when the composite is prepared, the conditions in the curing step and the like.

The semi-cured product is a product in which the curing reaction of the resin composition containing a main agent and a curing agent partially proceeds (B stage). Therefore, the semi-cured product may contain a thermosetting resin produced by the reaction of the main agent and the curing agent in the resin composition and the like. The semi-cured product may contain monomers of a main agent and a curing agent in addition to the thermosetting resin as a resin component and the like. The fact that the resin contained in the composite is a semi-cured product (B stage) before being completely cured (C stage) can be confirmed with, for example, a differential scanning calorimeter.

The semi-cured product may contain a resin having an aromatic ring as a component. It is preferable that the semi-cured product contain the resin described above so that fluorescence is easily detected and evaluation becomes easy. The semi-cured product may include, for example, at least one structural unit selected from the group consisting of a structural unit derived from a cyanate group, a structural unit derived from a bismaleimide group, and a structural unit derived from an epoxy group. When the semi-cured product of the resin composition includes a structural unit derived from a cyanate group, a structural unit derived from a bismaleimide group, and a structural unit derived from an epoxy group, it is possible to further improve adhesiveness between the composite and the metal sheet.

Examples of structural units having a cyanate group include a triazine ring. Examples of structural units derived from a bismaleimide group include a structure represented by the following Formula (1). Examples of structural units derived from an epoxy group include a structure represented by the following General Formula (2). These structural units can be detected using infrared absorption spectroscopy (IR). Proton nuclear magnetic resonance spectroscopy ($^1$H-NMR) and carbon-13 nuclear magnetic resonance spectroscopy ($^{13}$C-NMR) can be used for detection. The above structural units may be detected by any of IR, $^1$H-NMR and $^{13}$C-NMR.

[Chem. 1]

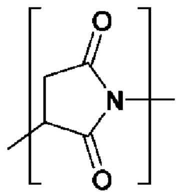

(1)

[Chem. 2]

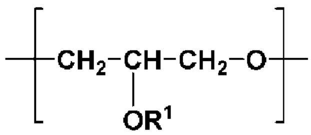

(2)

In General Formula (2), $R^1$ represents a hydrogen atom or another functional group. Examples of other functional groups include an alkyl group.

The semi-cured product may contain at least one selected from the group consisting of a cyanate resin, a bismaleimide resin and an epoxy resin as a thermosetting resin. The semi-cured product may contain, for example, a phenolic resin, a melamine resin, a urea resin, and an alkyd resin, in addition to the thermosetting resin.

The semi-cured product may contain at least one curing agent selected from the group consisting of a phosphine-based curing agent and an imidazole-based curing agent. The semi-cured product may be a cured product formed by curing the polymerizable compound (for example, a compound having a cyanate group, a compound having an epoxy group, etc.) contained in the resin composition with these curing agents.

The filling rate of the semi-cured product in the composite 10 may be, for example, 85 to 97 volume%. When the filling rate of the resin is within the above range, the amount of the resin component exuded can sufficiently increase during adhesion to the metal sheet under heat and pressure, and the composite 10 has better adhesiveness. In order to further improve adhesiveness, the lower limit value of the filling rate of the resin may be 88 volume% or more, 90 volume% or more, or 92 volume% or more.

The volume proportion of the resin in the composite 10 based on a total volume of the composite 10 may be, for example, 30 to 60 volume% or 35 to 55 volume%. The volume proportion of ceramic particles constituting the sintered ceramic component 20 in the composite 10 based on a total volume of the composite 10 may be, for example, 40 to 70 volume% or 45 to 65 volume%. The composite 10 having such a volume proportion can achieve both excellent adhesiveness and strength at a high level.

The average pore size of pores of the sintered ceramic component 20 may be, for example, 5 μm or less, 4 μm or less, or 3.5 μm or less. Since the size of pores of such a sintered ceramic component 20 is small, it is possible to sufficiently increase the contact area between ceramic particles. Therefore, it is possible to increase thermal conductivity. The average pore size of pores of the sintered ceramic component 20 may be 0.5 μm or more, 1 μm or more or 1.5 μm or more. Since such a sintered ceramic component 20 can be sufficiently deformed by pressing during adhesion, it is possible to increase the amount of the resin component exuded. Therefore, it is possible to further improve adhesiveness.

The average pore size of pores of the sintered ceramic component 20 can be measured by the following procedure. First, the composite 10 is heated to remove the resin. Then, using a mercury porosimeter, the pore size distribution is obtained when the sintered ceramic component 20 is pressed while increasing the pressure from 0.0042 MPa to 206.8 MPa. When the horizontal axis represents the pore size and the vertical axis represents the cumulative pore volume, the pore size when the cumulative pore volume reaches 50% of the total pore volume is defined as the average pore size. A mercury porosimeter (commercially available from Shimadzu Corporation) can be used.

The porosity of the sintered ceramic component 20, that is, the volume proportion of pores in the sintered ceramic component 20 may be, for example, 30 to 65 volume%, or 35 to 55 volume%. If the porosity is too large, the strength of the sintered ceramic component tends to decrease. On the other hand, if the porosity is too small, the amount of the resin exuded tends to decrease when the composite 10 is adhered to other members.

A bulk density [B(kg/$m^3$)] is calculated from the volume and the mass of the sintered ceramic component 20, and the porosity can be obtained from the bulk density and a theoretical density [A(kg/$m^3$)] of a ceramic according to the following Formula (1). In an example in which the sintered ceramic component 20 is a sintered nitride component, at least one selected from the group consisting of boron nitride, aluminum nitride, and silicon nitride may be contained as a nitride. In the case of boron nitride, the theoretical density A is 2,280 kg/$m^3$. In the case of aluminum nitride, the theoretical density A is 3,260 kg/$m^3$. In the case of silicon nitride, the theoretical density A is 3,170 kg/$m^3$.

$$\text{Porosity (volume\%)}=[1-(B/A)]\times 100 \qquad \text{Formula (1)}$$

When the sintered ceramic component 20 is a sintered boron nitride component, the bulk density B may be 800 to 1,500 kg/$m^3$ or 1,000 to 1,400 kg/$m^3$. If the bulk density B is too small, the strength of the sintered ceramic component 20 tends to decrease. On the other hand, if the bulk density B is too large, the amount of the resin filled decreases, and the amount of the resin exuded tends to decrease when the composite 10 is adhered to other members.

The thickness t of the sintered ceramic component 20 may be, for example, less than 2 mm, or less than 1.6 mm. The pores of the sintered ceramic component 20 having such a thickness can be sufficiently filled with the resin. Therefore, it is possible to reduce the size of the composite 10 and improve adhesiveness of the composite 10. Such a composite 10 is suitably used as a component of a semiconductor device. In order to easily produce the sintered ceramic component 20, the thickness t of the sintered ceramic component 20 may be, for example, 0.1 mm or more, or 0.2 mm or more.

The thickness of the composite 10 may be the same as the thickness t of the sintered ceramic component 20 or may be larger than the thickness t of the sintered ceramic component 20. The thickness of the composite 10 may be, for example, less than 2 mm, or less than 1.6 mm. The thickness of the composite 10 may be, for example, 0.1 mm or more, or 0.2 mm or more. The thickness of the composite 10 may be measured in a direction perpendicular to main surfaces 10a and 10b. When the thickness of the composite 10 is not constant, the thicknesses are measured at 10 arbitrarily selected locations, and it is acceptable if the average value thereof is within the above range. Even if the thickness of the sintered ceramic component 20 is not constant, the thicknesses are measured at 10 arbitrarily selected locations, and the average value thereof is defined as the thickness t. The size of the main surfaces 10a and 10b of the composite 10 is not particularly limited, and may be, for example, 500 $mm^2$ or more, 800 $mm^2$ or more, or 1,000 $mm^2$ or more.

The main surface 10a and the main surface 10b of the composite 10 are quadrangular, but the present invention is not limited to such a shape. For example, the shape of the main surface may be a polygon other than a quadrangle or may be a circle. In addition, a shape with chamfered corners or a shape with a notched part may be used. In addition, the main surface may have a through-hole that penetrates in the thickness direction.

The above composite can be produced by, for example, the following method. An example of a method for producing a composite includes a sintering step of preparing a porous sintered ceramic component, an impregnating step of impregnating a resin composition into pores of a sintered ceramic component to obtain a resin composition-impregnated component, a curing step of heating the resin composition-impregnated component at 70 to 160°C (preferably, 140°C) and semi-curing the resin composition filled into the pores to form a semi-cured product, and a selecting step of selecting a desired composite on the basis of an emission intensity of fluorescence generated from the semi-cured product by irradiating ultraviolet rays to the surface of the semi-cured product. Hereinafter, an example in which the sintered ceramic component is a sintered nitride component will be described.

The raw material powder used in the sintering step contains a nitride. The nitride contained in the raw material powder may include, for example, at least one nitride selected from the group consisting of boron nitride, aluminum

nitride, and silicon nitride. When boron nitride is contained, the boron nitride may be an amorphous boron nitride or a hexagonal boron nitride. When a sintered boron nitride component is prepared as the sintered ceramic component 20, as the raw material powder, for example, amorphous boron nitride powder particles having an average particle size of 0.5 to 10 μm or hexagonal boron nitride powder particles having an average particle size of 3.0 to 40 μm can be used.

In the sintering step, a formulation containing nitride powder may be molded and sintered to obtain a sintered nitride component. Molding may be performed by uniaxial pressing or a cold isostatic press (CIP) method. A sintering additive may be added to obtain a formulation before molding. Examples of sintering additives include metal oxides such as yttrium oxide, aluminum oxide and magnesium oxide, alkali metal carbonates such as lithium carbonate and sodium carbonate, and boric acid.

When a sintering additive is added, the amount of the sintering additive added with respect to a total amount of 100 parts by mass of the nitride and the sintering additive may be, for example, 0.01 to 20 parts by mass, 0.01 to 15 parts by mass, 0.1 to 15 parts by mass, or 0.1 to 10 parts by mass. When the amount of the sintering additive added is set to be within the above range, it becomes easier to adjust the average pore size of the sintered nitride component to be within the range to be described below.

The formulation may be formed into a sheet-like molded product by, for example, a doctor blade method. The molding method is not particularly limited, and press molding may be performed using a mold to form a molded product. The molding pressure may be, for example, 5 to 350 MPa. The shape of the molded product is not particularly limited, and may be a block-like shape or a sheet-like shape having a predetermined thickness. When the molded product has a sheet shape, the operation of cutting the sintered nitride component can be omitted, and the material loss due to processing can be reduced.

The sintering temperature in the sintering step may be, for example, 1,600 to 2,200°C, or 1,700 to 2,000°C. The sintering time may be, for example, 1 to 30 hours. The atmosphere during sintering may be, for example, an inert gas atmosphere such as nitrogen, helium, and argon.

For sintering, for example, a batch type furnace or a continuous type furnace can be used. Examples of batch type furnaces include a muffle furnace, a tube furnace, and an atmospheric furnace. Examples of continuous type furnaces include a rotary kiln, a screw conveyor furnace, a tunnel furnace, a belt furnace, a pusher furnace, and a large continuous furnace. Accordingly, a sintered nitride component can be obtained. The sintered nitride component may have a block shape. When the sintered nitride component has a block shape, a cutting step of cutting the block so as to obtain a predetermined thickness can be performed. In the cutting step, the sintered nitride component is cut using, for example, a wire-saw. Examples of wire-saws include a multi-cut wire-saw. According to such a cutting step, for example, it is possible to obtain a sheet-like sintered nitride component having a thickness of less than 2 mm.

In the impregnating step, a resin composition is impregnated into pores of the sintered nitride component to obtain a resin composition-impregnated component. In this case, the resin composition to be impregnated can be heated to start curing, and the viscosity can be adjusted. When the sintered nitride component is a thin sheet, the resin composition is easily impregnated thereinto. In addition, if the degree of curing when the resin composition is impregnated into the sintered nitride component is adjusted, it is suitable for impregnation, and it is possible to sufficiently increase the filling rate of the resin.

For example, when the temperature T1 at which the resin composition is impregnated into the sintered nitride component is the temperature T2 at which the resin composition is semi-cured, it may be equal to or higher than the temperature T3 (=T2-20°C) and lower than the temperature T4 (=T2+20°C). The temperature T3 may be, for example, 80 to 140°C. The impregnating method is not particularly limited, and the sintered nitride component may be immersed in the resin composition and the resin composition may be applied to the surface of the sintered nitride component for impregnation.

When the degree of curing of the resin composition is adjusted, the resin can be sufficiently filled into the sintered nitride component. The filling rate of the resin may be, for example, 85 to 97 volume%, and the lower limit value of the filling rate of the resin may be, for example, 88 volume% or more, 90 volume% or more, or 92 volume% or more.

The impregnating step may be performed under any condition of a reduced-pressure condition, a pressurized condition, and an atmospheric pressure condition or may be performed under a combination of two or more of impregnation under a reduced-pressure condition, impregnation under a pressurized condition, and impregnation under atmospheric pressure. The pressure in the impregnation device when the impregnating step is performed under a reduced-pressure condition may be, for example, 1,000 Pa or less, 500 Pa or less, 100 Pa or less, 50 Pa or less, or 20 Pa or less. The pressure in the impregnation device when the impregnating step is performed under a pressurized condition may be, for example, 1 MPa or more, 3 MPa or more, 10 MPa or more, or 30 MPa or more.

When the pore size of pores in the sintered nitride component is adjusted, it is also possible to promote impregnation of the resin composition according to a capillary phenomenon. In this regard, the average pore size of the sintered nitride component may be, for example, 0.5 to 5 μm, or 1 to 4 μm.

As the resin composition, for example, one that becomes the resin exemplified in the above description of the composite according to a curing or semi-curing reaction can be used. The resin composition may contain a solvent. The

viscosity of the resin composition may be adjusted by changing the amount of the solvent added, or the viscosity of the resin composition may be adjusted by partially causing the curing reaction to proceed. Examples of solvents include aliphatic alcohols such as ethanol and isopropanol, ether alcohols such as 2-methoxyethanol, 1-methoxy ethanol, 2-ethoxyethanol, 1-ethoxy-2-propanol, 2-butoxyethanol, 2-(2-methoxyethoxy)ethanol, 2-(2-ethoxyethoxy)ethanol, and 2-(2-butoxyethoxy)ethanol, glycol ethers such as ethylene glycol monomethyl ether, and ethylene glycol monobutyl ether, ketones such as acetone, methyl ethyl ketone, methyl isobutyl ketone, and diisobutyl ketone, and hydrocarbons such as toluene and xylene. These may be used alone or two or more thereof may be used in combination.

The resin composition may be thermosetting, and may contain, for example, at least one compound selected from the group consisting of a compound having a cyanate group, a compound having a bismaleimide group and a compound having an epoxy group, and a curing agent.

Examples of compounds having a cyanate group include dimethylmethylenebis(1,4-phenylene)biscyanate, and bis(4-cyanatophenyl)methane. Dimethylmethylenebis(1,4-phenylene)biscyanate is commercially available as, for example, TACN (product name, commercially available from Mitsubishi Gas Chemical Company, Inc.).

Examples of compounds having a bismaleimide group include N,N'-[(1-methylethylidene)bis[(p-phenylene)oxy(p-phenylene)]]bismal eimide, and 4,4'-diphenylmethane bismaleimide. N,N'-[(1-methylethylidene)bis[(p-phenylene)oxy(p-phenylene)]]bismal eimide is commercially available as, for example, BMI-80 (product name, commercially available from K·I Chemical Industry Co., Ltd.).

Examples of compounds having an epoxy group include a bisphenol F type epoxy resin, a bisphenol A type epoxy resin, a biphenyl type epoxy resin, and a multifunctional epoxy resin. For example, 1,6-bis(2,3-epoxypropan-1-yloxy)naphthalene commercially available as HP-4032D (product name, commercially available from DIC) may be used.

The curing agent may contain a phosphine-based curing agent and an imidazole-based curing agent. The phosphine-based curing agent can promote a triazine formation reaction by trimerization of a compound having a cyanate group or a cyanate resin.

Examples of phosphine-based curing agents include tetraphenylphosphonium tetra-p-tolylborate and tetraphenylphosphonium tetraphenylborate. Tetraphenylphosphonium tetra-p-tolylborate is commercially available as, for example, TPP-MK (product name, commercially available from Hokko Chemical Industry Co., Ltd.).

The imidazole-based curing agent generates oxazoline and promotes a curing reaction of a compound having an epoxy group or an epoxy resin. Examples of imidazole-based curing agents include 1-(1-cyanomethyl)-2-ethyl-4-methyl-1H-imidazole, and 2-ethyl-4-methylimidazole. 1-(1-cyanomethyl)-2-ethyl-4-methyl-1H-imidazole is commercially available as, for example, 2E4MZ-CN (product name, commercially available from Shikoku Chemical Corporation).

The content of the phosphine-based curing agent with respect to a total amount of 100 parts by mass of the compound having a cyanate group, the compound having a bismaleimide group and the compound having an epoxy group may be, for example, 5 parts by mass or less, 4 parts by mass or less, or 3 parts by mass or less. The content of the phosphine-based curing agent with respect to a total amount of 100 parts by mass of the compound having a cyanate group, the compound having a bismaleimide group and the compound having an epoxy group may be, for example, 0.1 parts by mass or more or 0.5 parts by mass or more. When the content of the phosphine-based curing agent is within the above range, it is easy to prepare the composite and it is possible to further shorten the time taken for the composite sheet cut out from the composite to be adhered to other members.

The content of the imidazole-based curing agent with respect to a total amount of 100 parts by mass of the compound having a cyanate group, the compound having a bismaleimide group and the compound having an epoxy group may be, for example, 0.1 parts by mass or less, 0.05 parts by mass or less, or 0.03 parts by mass or less. The content of the imidazole-based curing agent with respect to a total amount of 100 parts by mass of the compound having a cyanate group, the compound having a bismaleimide group and the compound having an epoxy group may be, for example, 0.001 parts by mass or more, or 0.005 parts by mass or more. When the content of the imidazole-based curing agent is within the above range, it is easy to prepare the composite, and it is possible to further shorten the time taken for the composite sheet cut out from the composite to be adhered to other members.

The resin composition may contain components other than the main agent and the curing agent. Other components include, for example, other resins such as a phenolic resin, a melamine resin, a urea resin, and an alkyd resin, and may further include a silane coupling agent, a leveling agent, an antifoaming agent, a surface adjusting agent, and a wetting and dispersing agent. The content of these other components based on a total amount of the resin composition may be, for example, 20 mass% or less, 10 mass% or less, or 5 mass% or less.

After the impregnating step, a curing step of semi-curing the resin composition impregnated into pores is provided. In the curing step, according to the type of the resin composition (or a curing agent added as necessary), the resin composition is semi-cured by heating, and/or light emission. In the curing step, the curing state of the semi-cured product is adjusted, and the fluorescence emission intensity can be adjusted so that it is within a predetermined range. Generally, in the initial stage of curing, the fluorescence emission intensity tends to increase as the curing proceeds, and when curing proceeds beyond a certain level, the fluorescence emission intensity tends to decrease. The product in a semi-cured state may be used to perform temporary press-bonding with other members such as a metal sheet and

then heated so that the composite and other members may be adhered.

In the curing step, the heating temperature when the resin composition is semi-cured by heating may be, for example, 80 to 130°C. The semi-cured product obtained by semi-curing the resin composition may contain, as the resin component, at least one thermosetting resin selected from the group consisting of a cyanate resin, a bismaleimide resin and an epoxy resin, and a curing agent. The semi-cured product may contain, as the resin component, for example, other resins such as a phenolic resin, a melamine resin, a urea resin, and an alkyd resin, and a component derived from a silane coupling agent, a leveling agent, an antifoaming agent, a surface adjusting agent, and a wetting and dispersing agent.

In the selecting step, ultraviolet rays are emitted to the surface of the semi-cured product formed in the curing step, and a desired composite is selected based on the emission intensity of fluorescence generated from the semi-cured product. Selection conditions can be appropriately adjusted based on adhesiveness performance and heat radiation performance required for the composite, and for example, when ultraviolet rays are emitted to a cured product obtained by completely curing a semi-cured product of the composite, an emission intensity of fluorescence generated from the cured product being set as X, ultraviolet rays being emitted to the semi-cured product, and an emission intensity of fluorescence generated from the semi-cured product being set as Y, adjustment may be performed based on the value of Y/X, and the value of Y/X may be 3.5 to 7.0.

Since the above composite 10 has excellent heat radiation during adhesion to other members, it can be suitably used as, for example, a heat radiation member. FIG. 3 is a cross-sectional view of an example of a laminate cut in the thickness direction. A laminate 100 includes the sheet-like composite 10, a metal sheet 30 adhered to the main surface 10a of the composite 10, and a metal sheet 40 adhered to the main surface 10b of the composite 10. The metal sheets 30 and 40 may be a metal plate or a metal foil. Examples of materials of the metal sheets 30 and 40 include aluminum and copper. The materials and thicknesses of the metal sheets 30 and 40 may be the same as or different from each other. In addition, it is not essential to provide both of the metal sheets 30 and 40, and in a modified example of the laminate 100, only one of the metal sheets 30 and 40 may be provided.

The laminate 100 may have a resin cured layer between the composite 10 and the metal sheets 30 and 40 without departing from the spirit of the present disclosure. The resin cured layer may be formed by post-curing the semi-cured product exuded from the composite 10. The composite 10 and the metal sheets 30 and 40 in the laminate 100 are sufficiently firmly adhered when the exuded semi-cured product is cured, and thus the laminate 100 has excellent adhesion reliability. In addition, since the laminate 100 is produced using a sheet-like composite (B stage sheet) in which the value of Y/X related to the fluorescence emission intensity is within a predetermined range, it also has excellent heat radiation. Since such a laminate is thin and has excellent adhesion reliability and heat radiation, for example, it can be suitably used as a heat radiation member for a semiconductor device and the like.

While several embodiments have been described above, the same descriptions can be applied to common configurations. In addition, the present disclosure is not limited to the above embodiments.

[Examples]

The content of the present disclosure will be described in more detail with reference to examples and comparative examples, but the present disclosure is not limited to the following examples.

(Example 1)

<Production of sintered nitride component (sintered ceramic component)>

100 parts by mass of orthoboric acid (commercially available from Nippon Denko Co., Ltd.), and 35 parts by mass of acetylene black (product name: HS100, commercially available from Denka Co., Ltd.) were mixed using a Henschel mixer. The obtained mixture was filled into a graphite crucible and heated at 2,200°C for 5 hours in an argon atmosphere in an arc furnace to obtain a mass boron carbide ($B_4C$). The obtained mass was coarsely pulverized with a jaw crusher to obtain a coarse powder. The coarse powder was additionally pulverized with a ball mill having silicon carbide balls (φ10 mm) to obtain a pulverized powder.

The prepared pulverized powder was filled into a boron nitride crucible. Then, using a resistance heating furnace, heating was performed for 10 hours in a nitrogen gas atmosphere under conditions of 2,000°C and 0.85 MPa. Thus, a fired product containing boron carbonitride ($B_4CN_4$) was obtained.

A powder-like boric acid and calcium carbonate were added to prepare a sintering additive. In preparation, 50.0 parts by mass of calcium carbonate was added with respect 100 parts by mass of boric acid. In this case, regarding the atomic ratio of boron and calcium, the proportion of calcium was 17.5 atom% with respect to 100 atom% of boron. 20 parts by mass of the sintering additive was added with respect to 100 parts by mass of the fired product, and mixed using a Henschel mixer to prepare a powder-like formulation.

The formulation was pressed using a powder press machine at 150 MPa for 30 seconds to obtain a sheet-like (length×width×thickness=50 mm×50 mm×1.5 mm) molded product. The molded product was put into a boron nitride container and introduced into a batch-type high-frequency furnace. In the batch-type high-frequency furnace, heating was performed under conditions of atmospheric pressure, a nitrogen flow rate of 5 L/min, and 2,000°C for 5 hours. Then, the sintered boron nitride component was removed from the boron nitride container. Accordingly, a sheet-like (square prism-shaped) sintered boron nitride component was obtained. The thickness of the sintered boron nitride component was 1.6 mm.

<Measurement of average pore size>

For the obtained sintered boron nitride component, the pore volume distribution was measured while increasing the pressure from 0.0042 MPa to 206.8 MPa using a mercury porosimeter (device name: Autopore IV9500, commercially available from Shimadzu Corporation). The pore size at which the cumulative pore volume reached 50% of the total pore volume was defined as the "average pore size." The results are shown in Table 1.

<Production of composite sheet>

0.5 parts by mass of a commercially available curing agent (product name: Achmex H-84B, commercially available from The Nippon Synthetic Chemical Industry Co., Ltd.) was added to 10 parts by mass of a commercially available bismaleimide (BMI-80 (product name, commercially available from K·I Chemical Industry Co., Ltd.), 29.5 parts by mass of an epoxy resin (product name: Epikote 807, commercially available from Mitsubishi Chemical Corporation), and 60 parts by mass of a commercially available cyanate resin (product name: TACN, commercially available from Mitsubishi Gas Chemical Company, Inc.) to prepare a resin composition. The prepared resin composition was added dropwise to the main surface of the sintered boron nitride component heated to 140°C using a syringe. The resin composition added dropwise to the main surface of the sintered boron nitride component under atmospheric pressure was applied and spread using a rubber spatula, and the resin composition was applied and spread on the entire main surface to obtain a resin composition-impregnated component.

The resin composition-impregnated component was heated at 140°C for 0.3 hours under atmospheric pressure, and the resin composition was semi-cured (curing step). Accordingly, a square prism-shaped composite (length×width×thickness=length×width×thickness=50 mm×50 mm×0.31 mm) was produced.

(Examples 2 to 5)

A composite was produced in the same manner as in Example 1 except that the heating time in the curing step was changed as shown in conditions described in Table 1.

<Measurement of filling rate of resin (semi-cured product)>

The filling rate of the semi-cured product contained in the composite prepared in Examples 1 to 5 was obtained by the following Formula (3). The results are as shown in Table 1.

filling rate (volume%) of semi-cured product in composite={(bulk density of composite-bulk density of sintered boron nitride component)/(theoretical density of composite-bulk density of sintered boron nitride component)}×100 …Formula (3)

The bulk density of the sintered boron nitride component and the composite was obtained according to "Methods of measuring density and specific gravity by geometric measurement" in JIS Z 8807: 2012 based on the volume calculated from the length (measured with a vernier caliper) of each side of the sintered boron nitride component or the composite and the mass of the sintered boron nitride component or the composite measured with an electronic scale (refer to Item 9 of JIS Z 8807: 2012). The theoretical density of the composite was obtained by the following Formula (4).

$$\text{theoretical density of composite} = \text{true density of sintered boron nitride component} + \text{true density of semi-cured product} \times (1 - \text{bulk density of sintered boron nitride component}/\text{true density of boron nitride}) \ldots \text{Formula (4)}$$

The true density of the sintered boron nitride component and the semi-cured product was obtained according to "Methods of measuring density and specific gravity by gas replacement method" in JIS Z 8807: 2012 based on the volume and mass of the sintered boron nitride component and the semi-cured product measured using a dry automatic density meter (refer to Formulae (14) to (17) in Item 11 of JIS Z 8807: 2012).

<Curing rate of semi-cured product>

The curing rate of the semi-cured product (the semi-cured product of the resin composition) contained in the composite prepared in Examples 1 to 5 was determined by measurement using a differential scanning calorimeter. First, the amount Q of heat generated when 1 g of the uncured resin composition was completely cured was measured. Then, a sample taken from the semi-cured product of the composite was heated in the same manner and the amount R heat generated when the sample was completely cured was obtained. In this case, the mass of the sample used for measurement using a differential scanning calorimeter was the same as that of the resin composition used for measurement of the heat amount Q. Assuming that the semi-cured product contained c (mass%) of a thermosetting component, the curing rate of the resin composition impregnated into the composite was obtained by the following Formula (A). The results are shown in Table 1.

$$\text{curing rate (\%) of impregnated resin composition} = \{1 - [(R/c) \times 100]/Q\} \times 100 \cdots \text{Formula (A)}$$

<Emission intensity of fluorescence of semi-cured product and evaluation>

For the semi-cured product contained in the composite prepared in Examples 1 to 5, the fluorescence emission intensity was measured. Two composites prepared in Examples 1 to 5 were prepared. Ultraviolet rays were emitted to one of the two prepared composites, and the obtained fluorescence emission intensity was measured. Next, the composite was heated to further cause curing of the semi-cured product to proceed so that the curing rate of the resin composition was 100%, and thereby a cured product was obtained. Then, under the same conditions as described above, ultraviolet rays were emitted to the obtained cured product, and the obtained fluorescence emission intensity was measured. In this case, the measured emission intensity was set as X. Next, under the same conditions as described above, ultraviolet rays were emitted to the other composite, and the obtained fluorescence emission intensity was set as Y Then, the value of Y/X was calculated from the value of X and the value of Y and evaluated according to the following criteria. Here, even if the ratio to the value of X was calculated using the value of the fluorescence emission intensity obtained before the semi-cured product was cured in place of the value of Y, it was confirmed that the value corresponded well to Y/X.

[Conditions for measuring fluorescence emission intensity]

The fluorescence emission intensity was measured using a UV curing sensor (CUREATYPE-B, commercially available from AcroEdge Corporation). Here, the measurement was performed on both surfaces of the composite, and the average value was taken as the emission intensity of fluorescence in the composite.

amount of UV light emitted: LED Power 4
sensor sensitivity: Gain Control 0
distance between the UV emission unit and the sensor unit, and the sample surface: 130 mm

[Evaluation criteria for emission intensity]

A: the value of Y/X was 4.3 or more.
B: the value of Y/X was 4.0 or more and less than 4.3.
C: the value of Y/X was 3.5 or more and less than 4.0.
D: the value of Y/X was less than 3.5.

<Production of laminate>

The fluorescence emission intensity of the cured product was measured and laminates were produced using the composites of Examples 1 to 5. The above composite (length×width×thickness=50 mm×20 mm×0.31 mm) was disposed between a sheet-like copper foil (length×width×thickness=100 mm×20 mm×0.035 mm) and a sheet-like copper plate (length×width×thickness=100 mm×20 mm×1 mm), and a laminate including the copper foil, the composite and the copper plate in this order was produced. The laminate was heated and pressed under conditions of 200°C and 5 MPa for 5 minutes and then heated under conditions of 200°C and atmospheric pressure for 2 hours. Thereby, the laminate was obtained.

<Evaluation of adhesiveness performance (adhesive strength)>

After the above treatment was performed, a 90° peel test was performed according to "adhesive-peeling adhesion strength test method" in JIS K 6854-1: 1999 using a universal testing machine (product name: RTG-1310, commercially available from A&D Co., Ltd.). Here, peeling was performed at the adhesive interface between the sheet-like copper foil and the composite sheet. Measurement was performed under conditions of a test speed of 50 mm/min, a load cell of 5 kN, and a measurement temperature of room temperature (20°C), the area proportion of the cohesive fracture part on the peeled surface was measured. Based on the measurement results, the adhesiveness was evaluated according to the following criteria. The results are shown in Table 1. Here, the cohesive fracture part was an area of the part in which the composite sheet was fractured, and a higher area proportion indicates better adhesiveness.

A: the area proportion of the cohesive fracture part was 70 area% or more.
B: the area proportion of the cohesive fracture part was 50 area% or more and less than 70 area%.
C: the area proportion of the cohesive fracture part was less than 50 area%.

<Measurement of heat radiation performance (thermal resistivity)>

After the above treatment was performed, the thermal resistivity was measured according to the method described in ASTM D5470. In addition, a semi-cured product was prepared by adjusting the curing rate of the resin composition used for preparing the composite to 50%, and the relative value based on the value of the thermal resistivity of the semi-cured product was calculated. The relative value was evaluated according to the following criteria. The results are shown in Table 1. Here, a smaller relative value indicates better heat radiation performance.

A: the relative value was 1.1 or less.
B: the relative value was more than 1.1 and 1.2 or less.
C: the relative value was more than 1.2.

[Table 1]

| | Production conditions | | | | Composite | | | Evaluation results | | | |
|---|---|---|---|---|---|---|---|---|---|---|---|
| | Sintered ceramic component | | Curing step | | | | | | Adhesiveness performance | Heat radiation | performance |
| | Thickness t [mm] | Average pore size [μm] | Heating temperature [°C] | Heating time [hr] | Filling rate [volume%] | Curing rate of semi-cured product [%] | Emission intensity of fluorescence (relative value based on emission intensity when completely cured: Y/X) | Performance evaluation based on emission intensity of fluorescence | Evaluation | Thermal resistivity (relative value based on thermal resistance when curing rate of resin composition is 50%) | Evaluation |
| Example 1 | 0.31 | 3.3 | 140 | 0.3 | 94.0 | 31 | 6.0 | B | B | 0.80 | A |
| Example 2 | 0.31 | 3.3 | 140 | 0.2 | 95.7 | 25 | 6.5 | B | B | 0.76 | A |
| Example 3 | 0.31 | 3.3 | 140 | 0.5 | 95.2 | 39 | 5.1 | A | A | 0.94 | A |
| Example 4 | 0.31 | 3.3 | 140 | 0.8 | 96.8 | 49 | 4.5 | A | A | 1.02 | A |
| Example 5 | 0.31 | 3.3 | 140 | 1.6 | 94.2 | 60 | 3.6 | B | A | 1.13 | B |
| Comparative Example 1 | 0.31 | 3.3 | 140 | 0.1 | 96.6 | 7 | 7.7 | D | C | 0.56 | A |
| Comparative Example 2 | 0.31 | 3.3 | 140 | 2.3 | 93.1 | 72 | 2.8 | D | B | 1.27 | C |
| Comparative Example 3 | 0.31 | 3.3 | 140 | 3.0 | 92.5 | 83 | 2.1 | D | C | 1.36 | C |

As shown in Table 1, it was confirmed that, based on ultraviolet ray emission and fluorescence emission intensity measurement as non-destructive inspection for composites, a composite that was estimated to have excellent adhesiveness performance and heat radiation performance exhibited actual adhesiveness performance and heat radiation performance in a well-balanced manner. In addition, similarly, it was also confirmed that a composite having a value of Y/X within a predetermined range of the present disclosure based on the emission intensity of fluorescence generated from the semi-cured product had excellent adhesiveness performance and heat radiation performance.

According to the present disclosure, it is possible to provide an evaluation method in which it is possible to evaluate whether adhesiveness performance and heat radiation performance are excellent when a laminate is formed by adhesion to other members by non-destructive analysis of a composite before adhesion. According to the present disclosure, it is possible to provide a composite that can exhibit excellent adhesiveness performance and heat radiation performance when adhered to other members to form a laminate.

**Reference Signs List**

10 Composite
10a, 10b Main surface
20 Sintered ceramic component
30, 40 Metal sheet
100 Laminate

**Claims**

1. A method for evaluating adhesiveness performance and heat radiation performance of a composite comprising a porous sintered ceramic component and a semi-cured product of a resin filled into pores of the sintered ceramic component, comprising:

   a step of emitting ultraviolet rays to the surface of the semi-cured product of the composite;
   a step of measuring an emission intensity of fluorescence generated from the semi-cured product; and
   a step of evaluating adhesiveness performance and heat radiation performance of the composite using the value of the emission intensity.

2. The method according to claim 1,
   wherein the step of evaluating adhesiveness performance and heat radiation performance of the composite using the value of the emission intensity is a step of evaluating adhesiveness performance and heat radiation performance of the composite based on the value of Y/X when a cured product obtained by completely curing a semi-cured product of the composite is irradiated with ultraviolet rays, an emission intensity of fluorescence generated from the cured product is X, the semi-cured product is irradiated with ultraviolet rays, and an emission intensity of fluorescence generated from the semi-cured product is Y

3. The method according to claim 1 or 2,
   wherein the semi-cured product comprises a resin having an aromatic ring as a component.

4. A composite, comprising

   a porous sintered ceramic component and a semi-cured product of a resin filled into pores of the sintered ceramic component,
   wherein a value of Y/X is 3.5 to 7.0 when a cured product obtained by completely curing a semi-cured product of the composite is irradiated with ultraviolet rays, an emission intensity of fluorescence generated from the cured product is X, the semi-cured product is irradiated with ultraviolet rays, and an emission intensity of fluorescence generated from the semi-cured product is Y

5. The composite according to claim 4,
   wherein the semi-cured product comprises a resin having an aromatic ring as a component.

Fig.1

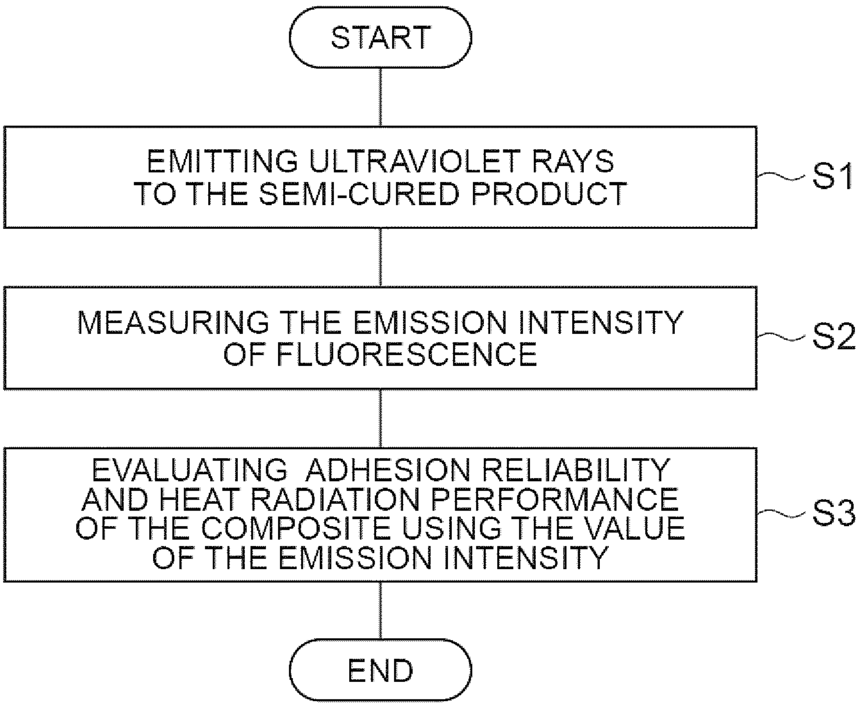
START
EMITTING ULTRAVIOLET RAYS TO THE SEMI-CURED PRODUCT
S1
MEASURING THE EMISSION INTENSITY OF FLUORESCENCE
S2
EVALUATING ADHESION RELIABILITY AND HEAT RADIATION PERFORMANCE OF THE COMPOSITE USING THE VALUE OF THE EMISSION INTENSITY
S3
END

*Fig.2*

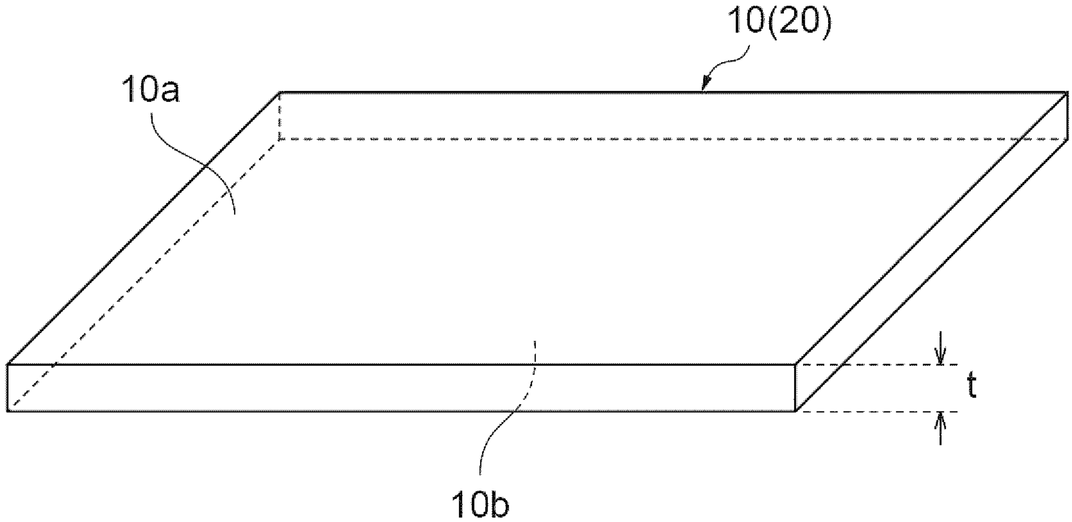

*Fig.3*

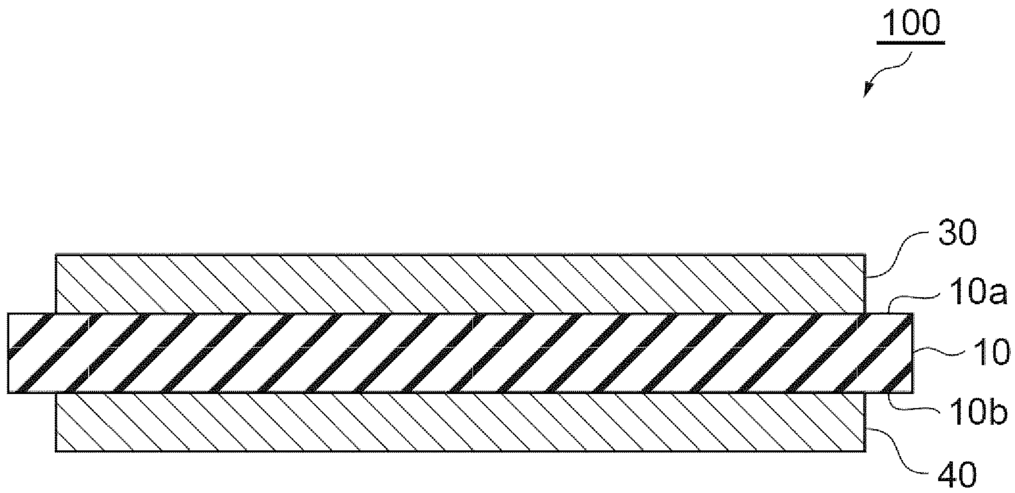

## INTERNATIONAL SEARCH REPORT

International application No. **PCT/JP2021/035575**

**A. CLASSIFICATION OF SUBJECT MATTER**

***C04B 38/00***(2006.01)i; ***C04B 41/82***(2006.01)i; ***G01N 21/64***(2006.01)i
FI: G01N21/64 Z; C04B38/00 303Z; C04B41/82 B

According to International Patent Classification (IPC) or to both national classification and IPC

**B. FIELDS SEARCHED**

Minimum documentation searched (classification system followed by classification symbols)

G01N21/62-21/74

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

JSTPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| Y | JP 2016-103611 A (DENKA CO., LTD.) 02 June 2016 (2016-06-02) paragraphs [0018]-[0020], [0031], [0033], [0037] | 4-5 |
| A | entire text, all drawings | 1-3 |
| Y | JP 2016-111171 A (DENKA CO., LTD.) 20 June 2016 (2016-06-20) paragraph [0037] | 4-5 |
| A | entire text, all drawings | 1-3 |
| A | WO 2020/004600 A1 (DENKA CO., LTD.) 02 January 2020 (2020-01-02) entire text, all drawings | 1-5 |
| A | WO 2019/172345 A1 (DENKA CO., LTD.) 12 September 2019 (2019-09-12) entire text, all drawings | 1-5 |
| A | WO 2014/196496 A1 (DENKA CO., LTD.) 11 December 2014 (2014-12-11) entire text, all drawings | 1-5 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 October 2021** | **02 November 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/035575**

| Patent document cited in search report | Publication date (day/month/year) | Patent family member(s) | Publication date (day/month/year) |
|---|---|---|---|
| JP 2016-103611 A | 02 June 2016 | (Family: none) | |
| JP 2016-111171 A | 20 June 2016 | (Family: none) | |
| WO 2020/004600 A1 | 02 January 2020 | (Family: none) | |
| WO 2019/172345 A1 | 12 September 2019 | US 2020/0406586 A1<br>entire text, all drawings<br>EP 3763690 A1<br>CN 111356669 A | |
| WO 2014/196496 A1 | 11 December 2014 | US 2016/0130187 A1<br>entire text, all drawings<br>US 2017/0036963 A1<br>EP 3006419 A1<br>CN 105263886 A<br>KR 10-2016-0016857 A<br>CN 111499391 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2014196496 A
- JP 2016103611 A